# EUROPÄISCHE PATENTSCHRIFT

(11) **EP 2 975 593 B1**
(45) Veröffentlichungstag und Bekanntmachung des Hinweises auf die Patenterteilung: **11.01.2023**
(21) Anmeldenummer: 15175850.5
(22) Anmeldetag: 08.07.2015
(51) Int. Cl.: G08G 1/14, B62D 15/02, B60W 30/06, B60W 10/04, B60W 10/184, B60W 10/20, B60W 50/14, B60W 50/16

(54) **VERFAHREN ZUM UNTERSTÜTZEN EINES FAHRERS BEIM EINPARKEN EINES KRAFTFAHRZEUGS, FAHRERASSISTENZSYSTEM SOWIE KRAFTFAHRZEUG**
METHOD FOR SUPPORTING A DRIVER WHEN PARKING OF A MOTOR VEHICLE, DRIVER ASSISTANCE SYSTEM AND MOTOR VEHICLE
PROCÉDÉ D'ASSISTANCE D'UN CONDUCTEUR LORS DU STATIONNEMENT D'UN VÉHICULE AUTOMOBILE, SYSTÈME D'ASSISTANCE DE CONDUCTEUR ET VÉHICULE AUTOMOBILE

(30) Priorität: 18.07.2014 DE 102014110172
(43) Veröffentlichungstag der Anmeldung: 20.01.2016
(73) Patentinhaber: Valeo Schalter und Sensoren GmbH, 74321 Bietigheim-Bissingen (DE)
(72) Erfinder: Jecker, Nicolas, 74321 Bietigheim-Bissingen (DE); Jaya, Akhil Dheerendra, 74321 Bietigheim-Bissingen (DE)
(74) Vertreter: Pothmann, Karsten

(56) Entgegenhaltungen:
- EP-A1- 2 551 639
- EP-A2- 1 862 376
- WO-A1-2008/140438
- DE-A1- 19 505 223
- DE-A1-102004 027 521
- DE-A1-102007 002 262
- DE-A1-102009 046 912
- DE-A1-102010 049 585
- DE-A1-102012 216 753
- US-A1- 2005 096 974

## Beschreibung

Die vorliegende Erfindung betrifft ein Verfahren zum Unterstützen eines Fahrers beim Einparken eines Kraftfahrzeugs. Darüber hinaus betrifft die vorliegende Erfindung ein Fahrerassistenzsystem für ein Kraftfahrzeug. Schließlich betrifft die vorliegende Erfindung ein Kraftfahrzeug mit einem solchen Fahrerassistenzsystem.

Das Interesse richtet sich vorliegend insbesondere auf Fahrerassistenzsysteme, welche den Fahrer beim Einparken des Kraftfahrzeugs in einen Parkplatz oder einen Stellplatz unterstützen. Aus dem Stand der Technik sind bereits Fahrerassistenzsysteme bekannt, welche mit Hilfe von entsprechenden Sensoren Parklücken bzw. freie Stellplätze erkennen können und den Fahrer beim Einparkvorgang unterstützen. Dabei kann der Fahrer sowohl beim Einparken in Längsparkplätze als auch beim Einparken in Querparkplätze unterstützt werden. Darüber hinaus sind Fahrerassistenzsysteme bekannt, die das Kraftfahrzeug bei einem Einparkvorgang semi-autonom manövrieren. Hierbei übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes Manövrieren des Kraftfahrzeugs ermöglichen. Diese Systeme liegen derzeit nur als Prototyp vor oder gehen demnächst in Serie. Ziel ist es, ein Fahrerassistenzsystem bereitzustellen, das beispielsweise ein gesamtes Parkhaus oder einen Parkplatz autonom abfahren kann und das Kraftfahrzeug selbstständig parken kann.

In diesem Zusammenhang beschreibt die US 2005/0096974 A1 ein Verfahren zum Bereitstellen von Positionsdaten bezüglich einer Parkfläche für ein Kraftfahrzeug. Dabei werden Benutzerdaten vorgegeben, in denen bevorzugte Parameter bezüglich eines Parkplatzes hinterlegt sind. Anhand dieser Daten und einer Liste von freien Parkplätzen wird ein optimaler Parkplatz für einen Benutzer ermittelt.

Des Weiteren beschreibt die DE 195 05 223 A1 eine Leiteinrichtung für einen Parkplatz für Kraftfahrzeuge. Hierbei ist es vorgesehen, dass wenigstens eine Anzeigevorrichtung den Parkplatz lageplanmäßig darstellt und freie Stellplätze kenntlich macht. Die Leiteinrichtung ist zudem mit Einrichtungen verbunden, die einen Belegungszustand eines jeweiligen Stellplatzes erkennen können.

Ferner ist aus der WO 2012/019899 A1 ein Verfahren zur Unterstützung eines Einparkvorgangs in einem Parkhaus unter Verwendung eines Einparksystems in einem Kraftfahrzeug bekannt. Um ein vereinfachtes und schnelles Auffinden eines freien Parkplatzes zu ermöglichen, werden dem Einparksystem bei der Einfahrt und/oder während des Aufenthalts im Parkhaus Informationen über das Parkhaus bereitgestellt, wobei das Einparksystem durch Auswerten der bereitgestellten Informationen über das Parkhaus Steuerdaten für das Fahrzeug erzeugt und ausgibt und wobei das Fahrzeug basierend auf den Steuerdaten automatisch durch das Parkhaus bewegt wird und/oder die Steuerdaten als Navigationshinweise an den Fahrer ausgegeben werden.

Die DE10 2010 049 585 A1 zeigt ein Verfahren zur Unterstützung eines Fahrzeugführers eines Fahrzeugs bei einem Parkmanöver, wobei eine Solltrajektorie zur Erreichung einer Parkposition ermittelt wird und dem Fahrzeugführer durch eine haptische Rückkopplung vermittelt wird, ob er sich entlang der Solltrajektorie bewegt. Es werden in einer Umgebung des Fahrzeugs für das Fahrzeug geeignete Parkpositionen ermittelt. Von allen geeigneten Parkpositionen wird die einer aktuellen Fahrzeugposition nächstliegende geeignete Parkposition, in welche das Fahrzeug in einem Zug kollisionsfrei einparkbar ist, als eine relevante Parkposition ausgewählt. Es wird relevante Trajektorie zur Erreichung dieser relevanten Parkposition ermittelt. Die ermittelte relevante Trajektorie wird als Solltrajektorie übernommen. Ein auf eine Lenkung des Fahrzeugs einwirkendes Zusatzlenkmoment wird derart generiert, dass Lenkbewegungen entlang der Solltrajektorie unterstützt werden und von der Solltrajektorie abweichenden Lenkbewegungen entgegengewirkt wird.

Es ist Aufgabe der vorliegenden Erfindung, eine Lösung aufzuzeigen, wie bei einem Verfahren der eingangs genannten Gattung der Fahrer bei dem Einparken des Kraftfahrzeugs zuverlässiger unterstützt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren zum Unterstützen eines Fahrers beim Einparken eines Kraftfahrzeugs umfasst das Positionieren des Kraftfahrzeugs auf einer Parkfläche, welche eine Mehrzahl von Stellplatzreihen jeweils mit einer Mehrzahl von Stellplätzen für das Kraftfahrzeug und eine Mehrzahl von Fahrgassen zum Anfahren der Stellplatzreihen aufweist, das Empfangen von Umfelddaten, welche ein Umfeld zumindest einer der Fahrgassen beschreibt, mittels einer Empfangseinrichtung des Kraftfahrzeugs, das Ermitteln, ob die zumindest eine Fahrgasse auf einer Seite oder auf beiden Seiten jeweils durch eine der Stellplatzreihen begrenzt ist, anhand der empfangenen Umfelddaten mittels einer Auswerteeinrichtung des Kraftfahrzeugs, das Ausgeben eines ersten Signals, insbesondere mittels einer Anzeigeeinrichtung des Kraftfahrzeugs, falls die zumindest eine der Fahrgassen auf beiden Seiten durch jeweils eine der Stellplatzreihen begrenzt ist, und das Ausgeben eines zweiten Signals, insbesondere mittels der Anzeigeeinrichtung, falls die zumindest eine Fahrgasse auf einer Seite durch eine der Stellplatzreihen begrenzt ist.

Mit dem vorliegenden Verfahren soll der Fahrer beim Einparken auf einer Parkfläche unterstützt werden. Die Parkfläche kann dabei im Freien oder in einem Parkhaus angeordnet sein. Die Parkfläche umfasst eine Mehrzahl von Stellplatzreihen, die wiederum eine Mehrzahl von Stellplätzen aufweisen. Die Stellplätze können insbesondere zum Querparken des Kraftfahrzeugs vorgesehen sein. Darüber hinaus sind auf der Parkfläche Fahrgassen vorgesehen, die befahren werden können, um die Stellplätze der Stellplatzreihen zu erreichen. Vorliegend wird das Kraftfahrzeug auf der Parkfläche positioniert. Es kann auch vorgesehen sein, dass das Kraftfahrzeug auf der Parkfläche bewegt wird. Weiterhin wird anhand von Umfelddaten überprüft, ob eine Fahrgasse auf einer oder auf beiden Seiten von Stellplatzreihen begrenzt ist. Wenn die Fahrgasse auf beiden Seiten von Stellplatzreihen begrenzt ist, wird ein erstes Signal ausgegeben. Ist die Fahrgassenseite nur durch eine Stellplatzreihe begrenzt, wird ein vom ersten Signal verschiedenes, zweites Signal ausgeben. Dies ist beispielsweise der Fall, wenn die Fahrgasse auf der anderen Seite durch eine Wand, einen Zaun oder eine sonstige Bebauung begrenzt ist.

Der Erfindung liegt die Erkenntnis zugrunde, dass bei einer Fahrt auf einer Fahrgasse, die an beiden Seiten von Stellplatzreihen begrenzt ist, die Wahrscheinlichkeit einen Stellplatz aufzufinden höher ist als bei einer Fahrt auf einer Fahrgasse, die nur auf einer Seite von einer Stellplatzreihe begrenzt ist. Somit kann eine verbesserte Strategie bei der Parkplatzsuche ermöglicht werden, die den Fahrer bei der Parkplatzsuche unterstützt.

Bevorzugt werden die Umfelddaten von zumindest einem Umfeldsensor des Kraftfahrzeugs bereitgestellt. Der zumindest eine Umfeldsensor kann beispielsweise als Kamera ausgebildet sein, die eine Bildsequenz des Umfelds der zumindest einen Fahrgasse bereitstellen kann. Anhand einer geeigneten Bildverarbeitungseinrichtung kann - beispielsweise durch Objekterkennung - ermittelt werden, ob die zumindest eine Fahrgasse einseitig oder beidseitig durch Stellplatzreihen begrenzt ist. Darüber hinaus ist es auch denkbar, dass der zumindest eine Umfeldsensor als LiDAR (Light Detection And Ranging), Laserscanner, Ultraschallsensor und/oder Radarsensor ausgebildet ist. Auf diese Weise kann das Umfeld der zumindest einer Fahrgasse zuverlässig überprüft werden.

Alternativ oder zusätzlich kann es vorgesehen sein, dass die Umfelddaten in einer externen Datenbank gespeichert sind und zu der Empfangseinrichtung des Kraftfahrzeugs übertragen werden. Auf der externen Datenbank kann beispielsweise eine digitale Karte der Parkfläche hinterlegt sein. In dieser digitalen Karte können insbesondere die einzelnen Stellplatzreihen und die einzelnen Fahrgassen sowie deren Anordnung zueinander hinterlegt sein. Es ist denkbar, dass alleine anhand der Umfelddaten, die von der externen Datenbank bereitgestellt werden, ermittelt wird, ob die Fahrgasse einseitig oder beidseitig durch eine Stellplatzreihe begrenzt ist. Die Daten der externen Datenbank können aber auch dazu genutzt werden, die Daten, die mit dem Umfeldsensor erfasst werden, zu plausibilisieren.

Weiterhin hat es sich als vorteilhaft erwiesen, wenn zusätzlich zu den Umfelddaten Positionsdaten eines satellitengestützten Positionsbestimmungssystems berücksichtigt werden. Anhand eines globalen satellitengestützten Positionsbestimmungssystems (z. B. GPS) kann die Position des Kraftfahrzeugs zuverlässig ermittelt werden. Diese Daten können berücksichtigt werden, um die Umfelddaten, die von zumindest einem Umfeldsensor bereitgestellt werden, zu plausibilisieren. Die Positionsdaten können auch zum Abgleich mit der digitalen Karte, die beispielsweise auf der externen Datenbank hinterlegt ist, verwendet werden.

In einer bevorzugten Ausführungsform wird das Kraftfahrzeug auf der Parkfläche bewegt und das erste und/oder das zweite Signal werden vor einem Einfahren des Kraftfahrzeugs in die zumindest eine Fahrgasse ausgegeben. Der Fahrer kann beispielsweise sein Kraftfahrzeug auf einer Hauptfahrgasse bewegen, von der mehrere Fahrgassen abzweigen. Anhand der Umfelddaten kann bereits vor dem Zeitpunkt, an dem das Kraftfahrzeug eine bestimmte Fahrgasse erreicht hat, ermittelt werden, ob diese einseitig oder beidseitig durch Stellplätze begrenzt ist. So kann dem Fahrer bereits vor dem Einfahren in die zumindest eine Fahrgasse das erste oder das zweite Signal ausgegeben werden.

Bevorzugt werden als das erste Signal ein Hinweis an den Fahrer zum Einfahren in die zumindest eine Fahrgasse und als das zweite Signal ein Hinweis an den Fahrer zum Vorbeifahren an der zumindest einen Fahrgasse ausgegeben. Mit anderen Worten wird dem Fahrer - insbesondere vor dem Einfahren in die Fahrgasse - ein Hinweis ausgegeben, ob er in die jeweilige Fahrgasse einfahren soll oder nicht. Somit kann garantiert werden, dass der Fahrer in diejenigen Fahrgassen fährt, in denen die Wahrscheinlichkeit des Auffindens eines freien Parkplatzes bzw. einer freien Stellfläche höher ist.

In einer vorzugsweisen Ausführungsform wird das erste Signal und/oder das zweite Signal mittels einer Anzeigeeinrichtung des Kraftfahrzeugs ausgegeben. In einer Ausführungsform wird das erste und/oder zweite Signal dem Fahrer des Kraftfahrzeugs akustisch, visuell und/oder haptisch ausgegeben, insbesondere mittels der Anzeigeeinrichtung. Beispielsweise kann eine entsprechende Sprachausgabe vorgesehen sein, die dem Fahrer im Innenraum des Kraftfahrzeugs wiedergegeben wird und die ihm Anweisungen gibt, ob er in eine der Fahrgassen einfahren soll oder nicht. Alternativ oder zusätzlich kann eine haptische Rückmeldung ausgegeben werden. Dies kann beispielsweise durch einen entsprechenden Aktor, der im Lenkrad des Kraftfahrzeugs verbaut ist, erfolgen. Weiterhin kann es vorgesehen sein, dass dem Fahrer auf einer Anzeigeeinrichtung des Kraftfahrzeugs eine entsprechende optische Ausgabe dargestellt wird. Beispielsweise kann dem Fahrer ein Pfeil angezeigt werden, welcher angibt, dass der Fahrer in die Fahrgasse einfahren soll. Zudem kann es vorgesehen sein, dass die Fahrgassen, in die der Fahrer einfahren soll, im Vergleich zu den übrigen Fahrgassen auf einer digitalen Karte entsprechend hervorgehoben werden. Somit kann der Fahrer zuverlässig beim Führen des Kraftfahrzeugs unterstützt werden.

Bevorzugt wird in Abhängigkeit von dem ersten und/oder dem zweiten Signal ein Steuersignal an ein Lenkeinrichtung, eine Antriebseinrichtung und/oder eine Bremsanlage des Kraftfahrzeugs gesendet. Anhand des ersten und/oder des zweiten Signals kann ein Lenkeingriff vorgenommen werden, durch welchen das Kraftfahrzeug in eine Fahrgasse gelenkt wird, die beidseitig von Stellplatzreihen begrenzt ist. Wenn das zweite Signal ausgegeben wird, kann beispielsweise kein Eingriff in die Lenkung erfolgen, so dass das Kraftfahrzeug nicht in die Fahrgasse einfährt. Des Weiteren kann es vorgesehen sein, dass ein Antriebsmotor und/oder eine Bremsanlage so angesteuert werden, dass das Kraftfahrzeug in eine Fahrgasse, die als beidseitig mit Stellplätzen begrenzte Fahrgasse erkannt wurde, autonom fährt.

Bevorzugt wird das Kraftfahrzeug in Abhängigkeit von dem ersten und/oder dem zweiten Signal semi-autonom manövriert. Hierbei kann es insbesondere vorgesehen sein, dass das Fahrerassistenzsystem in die Lenkung des Kraftfahrzeugs eingreift und der Fahrer das Gaspedal und das Bremspedal selbst betätigt. Somit kann der Fahrer beim Aufsuchen eines Parkplatzes anhand des ersten und/oder des zweiten Signals zuverlässig unterstützt werden.

Weiterhin ist es vorteilhaft, wenn das Kraftfahrzeug in Abhängigkeit von dem ersten und/oder dem zweiten Signal autonom manövriert wird. Hierbei kann es vorgesehen sein, dass der Fahrer das Kraftfahrzeug an einem vorbestimmten Punkt, beispielsweise der Einfahrt der Parkfläche, abstellt und das Kraftfahrzeug durch das Fahrerassistenzsystem autonom zu einem freien Stellplatz manövriert und dort abgestellt wird. Anhand des ersten und/oder des zweiten Signals kann eine optimale Strategie für das Auffinden eines Parkplatzes bereitgestellt werden, wenn das Kraftfahrzeug beispielsweise der Reihe nach Fahrgassen durchfährt, die beidseitig von Stellplätzen begrenzt sind.

Ein erfindungsgemäßes Fahrerassistenzsystem für ein Kraftfahrzeug ist dazu ausgebildet, das erfindungsgemäße Verfahren durchzuführen. Insbesondere umfasst das Fahrerassistenzsystem eine Empfangseinrichtung zum Empfangen von Umfelddaten, eine Auswerteeinrichtung zum Auswerten der empfangenen Umfelddaten und eine Anzeigeeinrichtung zum Ausgeben der ersten und/oder der zweiten Fahrtrajektorie. Zudem kann das Fahrerassistenzsystem eine Steuereinrichtung zum Ausgeben des Steuersignals aufweisen, mit dem die Lenkung, der Antrieb und/oder die Bremse des Kraftfahrzeugs angesteuert werden können.

Ein erfindungsgemäßes Kraftfahrzeug umfasst das erfindungsgemäße Fahrerassistenzsystem.

Die in Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung eine Draufsicht auf ein Kraftfahrzeug, welches ein Fahrerassistenzsystem umfasst;
- Fig. 2: eine schematische Darstellung einer Parkfläche, die eine Mehrzahl von Stellplatzreihen und Fahrgassen umfasst; und
- Fig. 3: ein Flussdiagramm eines Verfahrens gemäß einer Ausführungsform der Erfindung.

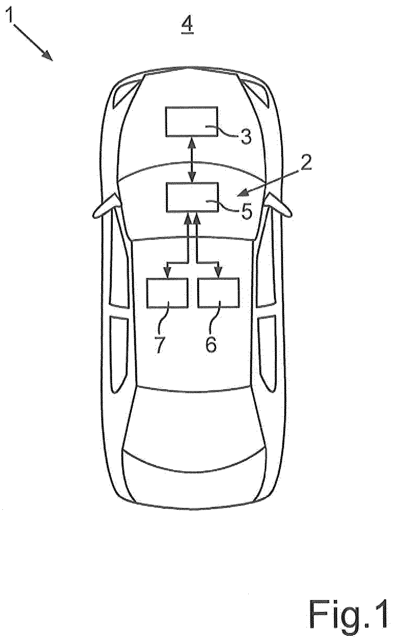

Fig. 1 zeigt ein Kraftfahrzeug gemäß einer Ausführungsform der vorliegenden Erfindung. Das Kraftfahrzeug 1, welches vorliegend als Personenkraftwagen ausgebildet ist, umfasst ein Fahrerassistenzsystem 2. Das Fahrerassistenzsystem 2 umfasst wiederum eine Empfangseinrichtung 3. Die Empfangseinrichtung 3 ist dazu ausgebildet, Umfelddaten des Kraftfahrzeugs 1 zu empfangen. Diese Umfelddaten können beispielsweise von einem hier nicht dargestellten Umfeldsensor des Kraftfahrzeugs 1 bereitgestellt werden. Als Umfeldsensor können beispielsweise eine oder mehrere Kameras vorgesehen sein, die an der Außenseite des Kraftfahrzeugs 1 angeordnet sind. Mit einer solchen Kamera kann eine Bildsequenz des Umfelds 4 des Kraftfahrzeugs 1 bereitgestellt werden. Darüber hinaus können als Umfeldsensor zumindest ein Ultraschallsensor, zumindest ein LiDAR, zumindest ein Laserscanner und/oder zumindest ein Radarsensor verwendet werden.

Anstelle der Umfelddaten zumindest eines Umfeldsensors können mit der Empfangseinrichtung 3 auch Umfelddaten von einer externen Datenbank empfangen werden. Die Umfelddaten können beispielsweise über eine drahtlose Datenverbindung von der externen Datenbank zu der Empfangseinrichtung 3 übertragen werden. Hierfür kann die Empfangseinrichtung 3 einen entsprechenden Empfänger aufweisen.

Des Weiteren umfasst das Fahrerassistenzsystem 2 eine Auswerteeinrichtung 5, die mit der Empfangseinrichtung 3 zur Datenübertragung verbunden ist. Mit der Auswerteeinrichtung 5 können die mit der Empfangseinrichtung 3 empfangenen Umfelddaten entsprechend ausgewertet werden. Darüber hinaus umfasst das Fahrerassistenzsystem 2 eine Anzeigeeinrichtung 6, die beispielsweise über ein entsprechendes Datenkabel mit der Auswerteeinrichtung 5 verbunden ist. Mit der Anzeigeeinrichtung 6 kann anhand der mit der Auswerteeinrichtung 5 ausgewerteten Umfelddaten eine entsprechende Ausgabe erfolgen. Beispielsweise kann dem Fahrer auf der Anzeigeeinrichtung 6 eine optische Ausgabe ausgegeben werden. Alternativ dazu kann die Anzeigeeinrichtung 6 derart ausgebildet sein, dass mit ihr ein akustisches Signal ausgegeben werden kann. Ferner ist es denkbar, dass mit der Anzeigeeinrichtung 6 ein haptisches Signal ausgegeben wird.

Des Weiteren umfasst das Fahrerassistenzsystem 2 eine Steuereinrichtung 7, die ebenfalls mit der Auswerteeinrichtung 5 in Datenkommunikation steht. Mit der Steuereinrichtung 7 kann ein entsprechendes Steuersignal an die Lenkung und/oder eine Antriebseinrichtung und/oder eine Bremseinrichtung des Kraftfahrzeugs ausgegeben werden. Somit kann anhand der mit der Auswerteeinrichtung 5 bearbeitenden Umfelddaten mittels der Steuereinrichtung 7 ein entsprechendes Steuersignal ausgegeben werden. Durch dieses Steuersignal kann das Kraftfahrzeug 1 beispielsweise zumindest semi-autonom manövriert werden.

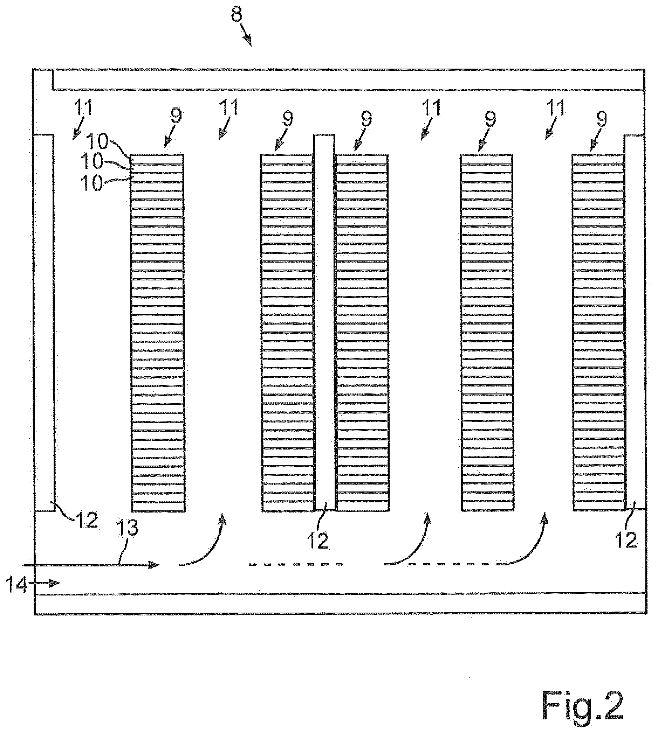

Fig. 2 zeigt eine schematische Darstellung einer Parkfläche 8 in einer Draufsicht. Die Parkfläche 8 umfasst eine Mehrzahl von Stellplatzreihen 9, die vorliegend parallel zueinander angeordnet sind. Jede der Stellplatzreihen 9 umfasst eine Mehrzahl von Stellplätzen 10. Die Stellplätze 10 sind vorliegend als Querparkplätze ausgebildet und dienen dem Abstellen eines Kraftfahrzeugs 1. Vorliegend sind die Stellplätze 10 in der jeweiligen Stellplatzreihe 9 nebeneinander angeordnet. Des Weiteren umfasst die Parkfläche 8 eine Mehrzahl von Fahrgassen 11. Auf den jeweiligen Fahrgassen 11 kann der Fahrer das Kraftfahrzeug 1 bewegen, wenn er zu einem der Stellplätze 10 gelangen möchte. Die Fahrgassen 11 sind dabei derart ausgebildet, dass die jeweiligen Stellplätze 10 senkrecht zu der Haupterstreckungsrichtung der Fahrgasse 11 angeordnet sind. Darüber hinaus umfasst die Parkfläche 8 eine Mehrzahl von Wänden 12.

Durch einen Pfeil 13 ist die Fahrt des Kraftfahrzeugs 1 auf einer Hauptfahrgasse 14 verdeutlicht. Von der Hauptfahrgasse 14 zweigen die Fahrgassen 11 ab. In dem vorliegenden Ausführungsbeispiel sind die Fahrgassen 11 senkrecht zu der Hauptfahrgasse 14 angeordnet. Mit zumindest einem Umfeldsensor des Kraftfahrzeugs 1 wird das Umfeld 5 des Kraftfahrzeugs 1 auf der Fahrt entlang der Hauptfahrgasse 14 erfasst. Insbesondere kann das Umfeld einer der Fahrgassen 11 erfasst werden. Zu diesem Zweck können - wie bereits zuvor erwähnt - die Daten zumindest einer Kamera, zumindest eines Ultraschallsensors, zumindest eines LiDARs, zumindest eines Laserscanners und/oder zumindest eines Radarsensors verwendet werden. Anhand der Umfelddaten kann durch die Auswertung mit der Auswerteeinrichtung 5 erkannt werden, ob die Fahrgasse 11 auf beiden Seiten durch eine Stellplatzreihe 9 begrenzt ist oder nicht. Es kann beispielsweise der Fall sein, dass eine der Fahrgassen 11 nur auf einer Seite durch eine Stellplatzreihe 9 begrenzt ist. Dies ist vorliegend bei der linken Fahrgasse 11 der Fall, die auf einer Seite durch die Wand 12 begrenzt ist.

Anstelle der Daten der Umfeldsensoren können auch Umfelddaten von der externen Datenbank an die Empfangseinrichtung 3 übertragen werden. In den Umfelddaten der externen Datenbank kann beispielsweise eine digitale Karte der Parkfläche hinterlegt sein, in der die Anordnung der Stellplatzreihen 9, der Fahrgassen 11 und der Wände 12 gekennzeichnet ist. Darüber hinaus können die Daten eines satellitenbasierten Positionsbestimmungssystems berücksichtigt werden. Wenn die Parkfläche 8 in einem Parkhaus angeordnet ist, in dem der Satellitenempfang nicht oder nur eingeschränkt zur Verfügung steht, kann die sogenannte "Indoor-Navigation" genutzt werden. Dazu können Daten des satellitengestützten Positionsbestimmungssystems extrapoliert werden. Zu diesem Zweck können auch die Daten eines Fahrgeschwindigkeitssensors und/oder eine Lenkwinkelsensors berücksichtigt werden. Darüber hinaus kann die Position des Kraftfahrzeugs 1 in dem Parkhaus durch ein drahtloses Kommunikationssystem bestimmt werden.

Anhand der Umfelddaten, die von der Empfangseinrichtung 3 empfangen werden, kann nun die Auswerteeinrichtung 5 ermitteln, ob eine der Fahrgassen 11 auf einer oder auf beiden Seiten durch eine Stellplatzreihe 9 begrenzt ist. Zu diesem Zweck können beispielsweise entsprechende Referenzdaten in einem Speicher der Auswerteeinrichtung 5 hinterlegt sein, die mit den empfangenen Umfelddaten verglichen werden. Wenn die Fahrgasse 11 auf beiden Seiten durch eine Stellplatzreihe 9 begrenzt ist, wird ein erstes Signal ausgegeben. Falls die Fahrgasse 11 nur auf einer Seite durch eine Stellplatzreihe 9 begrenzt ist, wird ein vom ersten Signal verschiedenes, zweites Signal ausgegeben. Die Signalausgabe erfolgt beispielsweise auf der Anzeigeeinrichtung 6 des Kraftfahrzeugs 1.

Somit kann dem Fahrer mittels des ersten Signals ein Hinweis ausgegeben werden, dass er in die Fahrgasse 11 einbiegen soll, die beidseitig durch Stellplatzreihen 9 begrenzt ist. Zusätzlich kann mit der Steuereinrichtung 7 anhand des ersten und/oder des zweiten Signals ein entsprechendes Steuersignal an eine Lenkeinrichtung und/oder eine Antriebseinrichtung und/oder eine Bremseinrichtung des Kraftfahrzeugs 1 ausgegeben werden. Auf diese Weise kann das Kraftfahrzeug 1 zumindest semi-autonom auf der Parkfläche 8 manövriert werden.

Alternativ können das erste und/oder zweite Signal aber auch direkt zum semiautonomen oder (voll-)autonomen Manövrieren benutzt werden, ohne es dem Fahrer vorher mittels einer Anzeigeeinrichtung auszugeben.

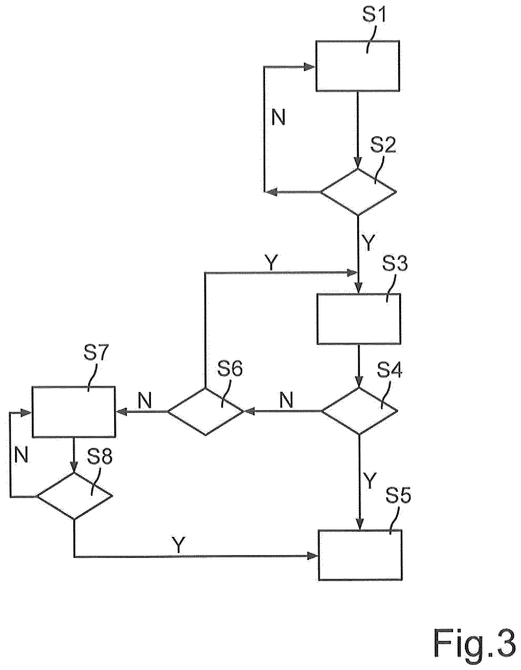

Das Ablaufdiagramm gemäß Fig. 3 verdeutlicht, wie das Kraftfahrzeug 1 auf der Parkfläche 8 manövriert werden kann. Dabei kann dem Fahrer durch das erste Signal und das zweite Signal ein Hinweis ausgegeben werden, wie er das Kraftfahrzeug 1 während der Fahrt auf der Parkfläche 8 manövrieren soll. Alternativ dazu kann es vorgesehen sein, dass das Kraftfahrzeug 1 mittels des Fahrerassistenzsystems 2 zumindest semi-autonom manövriert wird.

In einem ersten Schritt S1 wird das Kraftfahrzeug 1 entlang einer vorbestimmten Trajektorie, beispielsweise auf der Hauptfahrgasse 14, bewegt. Bei der Fahrt entlang dieser Trajektorie wird kontinuierlich überprüft, ob anhand der Umfelddaten eine Fahrgasse 11 im Umfeld des Kraftfahrzeugs 1 erfasst wird. Zu diesem Zweck können die mit der Empfangseinrichtung 3 empfangenen Umfelddaten mit der Auswerteeinrichtung 5 entsprechend ausgewertet werden. Wenn eine Fahrgasse 11 erkannt wird, wird in einem Schritt S2 überprüft, ob diese Fahrgasse 11 beidseitig von Stellplatzreihen 9 begrenzt ist. Ist dies nicht der Fall, wird das Verfahren wieder mit dem Schritt S1 gestartet.

Wenn eine Fahrgasse 11 erfasst wird, die von zwei Stellplatzreihen 9 umgeben ist, wird das Verfahren in dem Schritt S3 fortgeführt. In diesem Fall wird das erste Signal ausgegeben. Dieses kann dem Fahrer mittels der Anzeigeeinrichtung 7 ausgegeben werden. Alternativ dazu kann das Kraftfahrzeug 1 zumindest semi-autonom derart manövriert, dass das Kraftfahrzeug 1 in diese Fahrgasse 11 einbiegt.

Anschließend wird in einem Schritt S4 überprüft, ob ein freier Stellplatz 10 in einer der Stellplatzreihen 9 gefunden wurde. Zum Auffinden eines freien Stellplatzes 10 können die Umfeldsensoren des Kraftfahrzeugs 1 verwendet werden, mit denen die beiden Stellplatzreihen 9, die die Fahrgasse 11 begrenzen, überwacht werden. Wenn ein freier Stellplatz 10 gefunden wurde, wird das Kraftfahrzeug in dem Schritt S5 in den freien Stellplatz 10 eingeparkt. Das Einparken des Kraftfahrzeugs 1 in den freien Stellplatz 10 kann durch den Fahrer erfolgen. Alternativ dazu kann das Einparken zumindest semi-autonom erfolgen.

Falls kein freier Stellplatz 10 gefunden wurde, wird das Verfahren in dem Schritt S6 fortgeführt. Hierbei wird überprüft, ob auf der Parkfläche 8 eine weitere Fahrgasse 11 vorhanden ist, die beidseitig durch eine Stellplatzreihe 9 begrenzt ist. Ist dies der Fall, wird das Verfahren in dem Schritt S3 fortgeführt. Das heißt das Kraftfahrzeug 1 wird durch den Fahrer oder zumindest semi-autonom in die nächste Fahrgasse 11, die beidseitig mit Stellplatzreihe 9 begrenzt ist, manövriert.

Wenn keine weitere Fahrgasse 11, die beidseitig durch eine Stellplatzreihe 9 begrenzt ist, vorhanden ist, wird das Verfahren in dem Schritt S7 fortgeführt. Hierbei wird das Kraftfahrzeug 1 zu einer Fahrgasse 11 manövriert, die nur einseitig durch eine Stellplatzreihe 9 begrenzt ist. In dieser Fahrgasse 11 wird in einem Schritt S8 überprüft, ob ein freier Stellplatz 10 vorliegt. Ist dies der Fall, wird das Verfahren in dem Schritt S5 beendet. Ist dies nicht der Fall, wird das Verfahren mit dem Schritt S7 fortgeführt und es wird eine weitere Fahrgasse 11 aufgesucht, die nur einseitig durch eine Stellplatzreihe 9 begrenzt ist.

Durch das Verfahren kann eine optimale Strategie für das zumindest semi-autonome Manövrieren eines Kraftfahrzeugs 1 bei der Parkplatzsuche bereitgestellt werden. Das Verfahren kann in gleicher Weise für Parkflächen 8 verwendet werden, bei denen die Anordnung der Stellplatzreihen 9 und der Fahrgassen 11 von der gemäß dem Ausführungsbeispiel von Fig. 2 abweicht. Das Verfahren kann zudem für Stellplatzreihen 9 verwendet werden, bei denen die Stellplätze 10 zum Längsparken ausgebildet sind.

## Patentansprüche

1. Verfahren zum Unterstützen eines Fahrers beim Einparken eines Kraftfahrzeugs (1) auf einer Parkfläche (8), welche eine Mehrzahl von Stellplatzreihen (9) jeweils mit einer Mehrzahl von Stellplätzen (10) für das Kraftfahrzeug (1) und eine Mehrzahl von Fahrgassen (11) zum Anfahren der Stellplatzreihen (9) aufweist (S1) mit den Schritten:
- Empfangen von Umfelddaten, welche ein Umfeld (4) zumindest einer der Fahrgassen (11) beschreiben, mittels einer Empfangseinrichtung (3) des Kraftfahrzeugs (1),
- Ermitteln, ob die zumindest eine der Fahrgassen (11) auf einer Seite oder auf beiden Seiten jeweils durch eine der Stellplatzreihen (9) begrenzt ist, anhand der empfangenen Umfelddaten mittels einer Auswerteeinrichtung (5) des Kraftfahrzeugs (1) (S2), **gekennzeichnet durch**:
- Ausgeben eines ersten Signals, falls die zumindest eine der Fahrgassen (11) auf beiden Seiten durch jeweils eine der Stellplatzreihen (9) begrenzt ist, und
- Ausgeben eines zweiten Signals, falls die zumindest eine Fahrgasse (11) auf einer Seite durch eine der Stellplatzreihen (9) begrenzt ist.

2. Verfahren nach Anspruch 1,
**dadurch gekennzeichnet, dass**
die Umfelddaten von zumindest einem Umfeldsensor des Kraftfahrzeugs (1) bereitgestellt werden.

3. Verfahren nach Anspruch 1 oder 2,
**dadurch gekennzeichnet, dass**
die Umfelddaten in einer externen Datenbank gespeichert sind und zu der Empfangseinrichtung (3) des Kraftfahrzeugs (1) übertragen werden.

4. Verfahren nach einem der vorhergehenden Ansprüche,
**dadurch gekennzeichnet, dass**
zusätzlich zu den Umfelddaten Positionsdaten eines satellitengestützen Positionsbestimmungssystems berücksichtigt werden.

5. Verfahren nach einem der vorhergehenden Ansprüche,
**dadurch gekennzeichnet, dass**
das Kraftfahrzeug (1) auf der Parkfläche (8) bewegt wird und das erste und/oder das zweiten Signal vor einem Einfahren des Kraftfahrzeugs (1) in die zumindest eine Fahrgasse (11) ausgegeben werden.

6. Verfahren nach einem der vorhergehenden Ansprüche, wobei das erste Signal und/oder das zweite Signal mittels einer Anzeigeeinrichtung (6) des Kraftfahrzeugs (1) ausgegeben wird.

7. Verfahren nach einem der vorhergehenden Ansprüche,
**dadurch gekennzeichnet, dass**
als das erste Signal ein Hinweis an den Fahrer zum Einfahren in die zumindest eine Fahrgasse (11) und als das zweite Signal ein Hinweis an den Fahrer zum Vorbeifahren an der zumindest einen Fahrgasse (11) ausgeben werden.

8. Verfahren nach einem der vorhergehenden Ansprüche,
**dadurch gekennzeichnet, dass**
das erste und/oder das zweite Signal dem Fahrer des Kraftfahrzeugs (1) akustisch, visuell und/oder haptisch ausgegeben wird.

9. Verfahren nach einem der vorhergehenden Ansprüche,
**dadurch gekennzeichnet, dass**
in Abhängigkeit von dem ersten und/oder dem zweiten Signal ein Steuersignal mittels einer Steuereinrichtung (7) des Kraftfahrzeugs (1) an eine Lenkeinrichtung, eine Antriebseinrichtung und/oder eine Bremsanlage des Kraftfahrzeugs (1) gesendet wird.

10. Verfahren nach einem der vorhergehenden Ansprüche,
**dadurch gekennzeichnet, dass**
das Kraftfahrzeug (1) in Abhängigkeit von dem ersten und/oder dem zweiten Signal semi-autonom manövriert wird.

11. Verfahren nach einem der Ansprüche 1 bis 9,
**dadurch gekennzeichnet, dass**
das Kraftfahrzeug (1) in Abhängigkeit von dem ersten und/oder dem zweiten Signal autonom manövriert wird.

12. Fahrerassistenzsystem (2) für ein Kraftfahrzeug (1), welches dazu ausgebildet ist ein Verfahren nach einem der vorhergehenden Ansprüche durchzuführen.

13. Kraftfahrzeug (1) mit einem Fahrerassistenzsystem (2) nach Anspruch 12.

## Claims

1. Method for assisting a driver when parking a motor vehicle (1) in a parking area (8) which has a plurality of rows (9) of parking spaces each with a plurality of parking spaces (10) for the motor vehicle (1) and has a plurality of driving lanes (11) for approaching the rows (9) of parking spaces (S1), having the steps of:
- receiving environmental data, which describe an environment (4) of at least one of the driving lanes (11), by means of a receiving device (3) of the motor vehicle (1),
- determining whether the at least one of the driving lanes (11) is respectively bounded by one of the rows (9) of parking spaces on one side or on both sides, on the basis of the received environmental data, by means of an evaluation device (5) of the motor vehicle (1) (S2), **characterized by**:
- outputting a first signal if the at least one of the driving lanes (11) is bounded by in each case one of the rows (9) of parking spaces on both sides, and
- outputting a second signal if the at least one driving lane (11) is bounded by one of the rows (9) of parking spaces on one side.

2. Method according to Claim 1,
**characterized in that**
the environmental data are provided by at least one environmental sensor of the motor vehicle (1).

3. Method according to Claim 1 or 2,
**characterized in that**
the environmental data are stored in an external database and are transmitted to the receiving device (3) of the motor vehicle (1).

4. Method according to one of the preceding claims, **characterized in that**
position data from a satellite-based position determination system are taken into account in addition to the environmental data.

5. Method according to one of the preceding claims, **characterized in that**
the motor vehicle (1) is moved in the parking area (8) and the first and/or the second signal is/are output before driving the motor vehicle (1) into the at least one driving lane (11).

6. Method according to one of the preceding claims, wherein the first signal and/or the second signal is/are output by means of a display device (6) of the motor vehicle (1).

7. Method according to one of the preceding claims, **characterized in that**
a suggestion to the driver to drive into the at least one driving lane (11) is output as the first signal and a suggestion to the driver to drive past the at least one driving lane (11) is output as the second signal.

8. Method according to one of the preceding claims, **characterized in that**
the first and/or the second signal is/are output to the driver of the motor vehicle (1) acoustically, visually and/or haptically.

9. Method according to one of the preceding claims, **characterized in that**
on the basis of the first and/or the second signal, a control signal is transmitted to a steering device, a drive device and/or a brake system of the motor vehicle (1) by means of a control device (7) of the motor vehicle (1).

10. Method according to one of the preceding claims, **characterized in that**
the motor vehicle (1) is manoeuvred in a semi-autonomous manner on the basis of the first and/or the second signal.

11. Method according to one of Claims 1 to 9, **characterized in that**
the motor vehicle (1) is manoeuvred autonomously on the basis of the first and/or the second signal.

12. Driver assistance system (2) for a motor vehicle (1), which is designed to carry out a method according to one of the preceding claims.

13. Motor vehicle (1) having a driver assistance system (2) according to Claim 12.

## Revendications

1. Procédé d'assistance d'un conducteur lors du stationnement d'un véhicule automobile (1) sur une aire de stationnement (8) qui comporte une pluralité de rangées de places de stationnement (9) pourvues chacune d'une pluralité de places de stationnement (10) pour le véhicule automobile (1) et une pluralité de voies de circulation (11) destinées à approcher les rangées de places de stationnement (9) (S1), ledit procédé comprenant les étapes suivantes :
- recevoir des données d'environnement, qui décrivent un environnement (4) d'au moins une des voies de circulation (11), au moyen d'un dispositif de réception (3) du véhicule automobile (1),
- déterminer si l'au moins une des voies de circulation (11) est délimitée sur un côté ou sur les deux côtés par l'une des rangées de places de stationnement (9), sur la base des données d'environnement reçues à l'aide d'un dispositif d'évaluation (5) du véhicule automobile (1) (S2), **caractérisé par** les étapes suivantes :
- délivrer un premier signal si l'au moins une des voies de circulation (11) est délimitée sur les deux côtés par une des rangées de places de stationnement (9), et
- délivrer un deuxième signal si l'au moins une voie de circulation (11) est délimitée sur un côté par l'une des rangées de place de stationnement (9).

2. Procédé selon la revendication 1,
**caractérisé en ce que**
les données d'environnement sont fournies par au moins un capteur d'environnement du véhicule automobile (1).

3. Procédé selon la revendication 1 ou 2,
**caractérisé en ce que**
les données d'environnement sont mémorisées dans une base de données externe et sont transmises au dispositif de réception (3) du véhicule automobile (1).

4. Procédé selon l'une des revendications précédentes,
**caractérisé en ce que**
les données de position d'un système de détermination de position par satellite sont prises en compte en plus des données d'environnement.

5. Procédé selon l'une des revendications précédentes,
**caractérisé en ce que**
le véhicule automobile (1) est déplacé sur l'aire de stationnement (8) et le premier et/ou le deuxième signal sont délivrés avant que le véhicule automobile (1) n'entre dans l'au moins une voie de circulation (11) .

6. Procédé selon l'une des revendications précédentes, le premier signal et/ou le deuxième signal étant délivrés au moyen d'un dispositif d'affichage (6) du véhicule automobile (1).

7. Procédé selon l'une des revendications précédentes,
**caractérisé en ce que**
une indication au conducteur d'entrer dans l'au moins une voie de circulation (11) est délivrée comme premier signal et une indication au conducteur de passer devant l'au moins une voie de circulation (11) est délivrée comme deuxième signal.

8. Procédé selon l'une des revendications précédentes,
**caractérisé en ce que**
le premier et/ou le deuxième signal sont délivrés au conducteur du véhicule automobile (1) par des moyens acoustiques, visuels et/ou haptiques.

9. Procédé selon l'une des revendications précédentes,
**caractérisé en ce que**
en fonction du premier et/ou du deuxième signal, un signal de commande est envoyé par un dispositif de commande (7) du véhicule automobile (1) à un dispositif de direction, un dispositif d'entraînement et/ou un système de freinage du véhicule automobile (1).

10. Procédé selon l'une des revendications précédentes,
**caractérisé en ce que**
le véhicule automobile (1) est manœuvré de manière semi-autonome en fonction du premier signal et/ou du deuxième signal.

11. Procédé selon l'une des revendications 1 à 9,
**caractérisé en ce que**
le véhicule automobile (1) est manœuvré de manière autonome en fonction du premier signal et/ou du deuxième signal.

12. Système d'assistance d'un conducteur (2) destiné à un véhicule automobile (1), lequel système est conçu pour mettre en œuvre un procédé selon l'une des revendications précédentes.

13. Véhicule automobile (1) comprenant un système d'assistance d'un conducteur (2) selon la revendication 12.
